# EUROPEAN PATENT APPLICATION

(11) **EP 3 309 722 A1**
(43) Date of publication of application: **18.04.2018**
(21) Application number: 16807596.8
(22) Date of filing: 10.06.2016
(51) Int. Cl.: G06Q 10/02, H04M 11/00

(54) **WAITLIST MANAGEMENT SYSTEM, WAITLIST MANAGEMENT DEVICE, AND WAITLIST MANAGEMENT PROGRAM**

(30) Priority: 12.06.2015 JP 2015119723
(71) Applicant: Recruit Holdings Co., Ltd., Tokyo 104-0061 (JP)
(72) Inventor: WATASE, Takehiro, Tokyo 100-6640 (JP); SHINTANI, Akinori, Tokyo 100-6640 (JP)
(74) Representative: EIP
(86) International application number: PCT/JP2016/067371
(87) International publication number: WO 2016/199891

(57) **Abstract**

In a turn management system (1000), whether or not input to an input device (115) is not performed for a predetermined period of time is determined, and a standby screen is displayed when it is determined that the input to the input device (115) is not performed for the predetermined period of time. At the time, a first standby screen is displayed when there is turn waiting in a waiting list, and a second standby screen is displayed when there is no turn waiting in the waiting list. Thus, unneeded issuance of a numbered ticket can be suppressed, and operation interruptions of a worker or the like can be reduced.

## Description

### Cross Reference to Related Application

This application is based upon Japanese Patent Application No. 2015-119723 filed on June 12, 2015, and the contents of which are incorporated herein by reference.

### Technical Field

The present disclosure relates to a technology of managing a turn of turn waiting.

### Background Art

Conventionally, in a restaurant, a bank, a public office or the like, various turn management systems are adopted in order to arrange turns of visitors waiting for the services.

For example, in a popular restaurant or the like, by preparing a reservation form specified by the restaurant and writing a name of a person making a reservation and the number of persons there, turns of customers are managed (for example, see Patent Literature 1 (in particular, paragraphs 0003-0007)).

### Citation List

### Patent Literature

Patent Literature 1: Japanese Patent Laid-Open No. 2004-94380

### Summary of Invention

### Technical Problem

However, in such a turn management method using a reservation form, management is performed mainly by a clerk directly entering a list of persons making a reservation on a reservation form specified by a store or a person making a reservation writing a name and the number of persons there by himself/herself, and there is a problem that work burdens on a store side or burdens on the person making a reservation or the like are large. Further, the clerk needs to cope with a question such as how long the person is to wait, and it is one of the jobs that take time and labor on the store side.

One of objects of the present invention is to provide a technology capable of omitting time and labor of entering the name of a representative and the number of users on a reservation form equipped in a facility for a visitor to the facility or the like, and improving efficiency of visitor's turn waiting management job. The other objects will be clear by referring to the entire description.

### Solution to Problem

A turn management system which is one aspect of the present invention manages turn waiting in a facility under management, and includes discriminative presentation of a standby screen to be displayed at a display device according to a situation of turn waiting.

For example, the turn management system in a predetermined embodiment of the present invention includes: an input device that receives input for addition or update to a waiting list; a display device for displaying a screen including at least a part of the waiting list; and display control means for making the display device display a standby screen when the input to the input device is not performed for a predetermined period of time, wherein the display control means makes a first standby screen be displayed when there is turn waiting in the waiting list and makes a second standby screen be displayed when there is no turn waiting in the waiting list. In addition, the display control means may calculate predicted waiting time based on the number of waiting groups in the waiting list, determine whether or not the time obtained by adding the predicted waiting time to the present time is within business hours of the facility, and make the standby screen including a message indicating that reception of turn waiting is ended be displayed when the time is out of the business hours.

### Advantageous Effects of Invention

According to the predetermined embodiment of the present invention, time and labor of entering the name of a representative and the number of users on a reservation form equipped in a facility for a visitor or the like can be omitted, and efficiency of visitor's turn waiting management job can be improved. In addition, since whether or not turn waiting is needed can be more surely communicated to the visitor to the facility, unnecessary issuance of a numbered ticket can be suppressed, paper resources can be saved, and operation interruptions of a worker or the like can be reduced.

### Brief Description of Drawings

[Figure 1] Figure 1 is a diagram illustrating a schematic configuration of a turn management system 1000 relating to a first embodiment.
[Figure 2] Figure 2 is a block diagram illustrating a main configuration of a turn management terminal 100.
[Figure 3] Figure 3 is a diagram illustrating a reception screen displayed at the turn management terminal 100.
[Figure 4] Figure 4 is a diagram illustrating an operation screen when instructing update of a turn waiting situation.
[Figure 5] Figure 5 is a flowchart illustrating a flow of processing associated with the reception screen.
[Figure 6] Figure 6 is a flowchart illustrating an example of addition or update processing to a waiting list.
[Figure 7] Figure 7 is a flowchart illustrating an example of display control processing.
[Figure 8] Figure 8 is a diagram illustrating an example of a first standby screen.
[Figure 9] Figure 9 is an example of the reception screen to be displayed when there is no turn waiting.
[Figure 10] Figure 10 is a diagram illustrating an example of a second standby screen.
[Figure 11] Figure 11 is a diagram illustrating a schematic configuration of a turn management system 1000' relating to a second embodiment.
[Figure 12] Figure 12 is a sequence diagram in a case of managing a turn utilizing three turn management terminals 100A-100C.

### Description of Embodiments

Hereinafter, the embodiments of the present invention will be described in details with reference to the drawings. Note that same signs are attached to same elements and redundant description is omitted.

### A. First embodiment

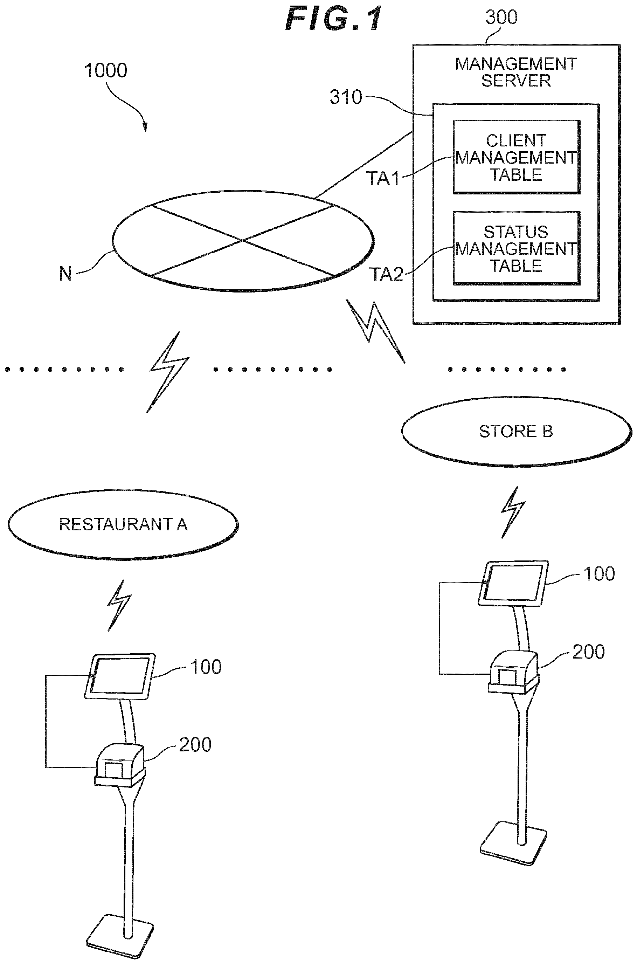

Figure 1 is a diagram illustrating a schematic configuration of a turn management system 1000 relating to the present embodiment. As illustrated in the figure, the turn management system 1000 includes turn management terminals 100 provided in facilities such as a restaurant, printers 200 connected to the turn management terminals 100, and a management server 300 that generally manages the turn management terminals 100 through a communication network N.

In the present embodiment, the case of managing turn waiting of visitors regarding a food service provided by a certain restaurant A is described as an example, but the present embodiment is not meant to be limited to the case and is applicable to all facilities that manage the turn waiting of visitors, such as stores of a composite amusement system, a shopping mall, a department store or the like, hospitals and public facilities. In addition, while the turn management terminal 100 installed in the restaurant A and the turn management terminal 100 installed in a store B are illustrated for convenience of description, the turn management terminals 100 installed in many facilities are managed by the management server 300.

The turn management terminal 100 is a terminal device installed near an entrance of a facility or the like for managing the turn waiting when a visitor enters the facility or receives a service, and a tablet terminal or the like is utilized. Target agents that provide services are the agents of all industry types/business categories. Of course, the turn management terminal 100 is not meant to be limited to the tablet terminal, and all terminal devices capable of giving and receiving data to/from the management server 300 through the communication network N, such as a personal computer (PC), a notebook PC, a smartphone, a cellular phone, or a personal digital assistant (PDA) can be utilized.

The printer 200 is connected with the turn management terminal 100 by a cable or radio, and issues a numbered ticket indicating the number of the turn waiting and a coupon or the like.

The management server 300 is configured of a computer with a high arithmetic processing capacity for example, and realizes a server function by a predetermined server program being operated in the computer. Here, the management server 300 is not necessarily configured by one computer, and may be configured of a plurality of computers distributed on the communication network N. The management server 300 includes a management database 310 for managing the turn management terminal 100 for each facility. The management database 310 includes a client management table TA1 and a status management table TA2.

In the client management table TA1, IDs and passcodes (accounts) intrinsic to the respective facilities are registered in correspondence. Here, "ID: A1..." and "passcode: AA2..." are set for the turn management terminal 100 utilized in "restaurant A". The IDs and passcodes for the respective facilities are set by managers (for example, owners of stores or the like) who manage the turn waiting in the individual facilities upon system introduction for example. Note that, in the present embodiment, the case of utilizing one turn management terminal 100 in one facility is assumed, but the plurality of turn management terminals 100 may be utilized in one facility (see a second embodiment). In the case of utilizing the plurality of turn management terminals 100 in one facility, the same ID and passcode may be utilized, but a plurality of IDs and passcodes may be discriminately used according to a predetermined condition for example.

In the status management table TA2, waiting lists in the individual facilities are registered. The waiting list includes a list of persons waiting for a turn, and information (status information) indicating each turn waiting situation (status). For the restaurant A, the number of groups with a reservation waiting for a turn is "1 group", reception time is "AM 11:11", and the number of persons with a reservation is "2 persons", or the like. Registered contents of the status management table TA2 are changed based on new registration information to the waiting list transmitted from the turn management terminal 100, or status update information (details are to be described later). Note that what kind of information is to be the status information can be appropriately set and changed by the managers of the individual facilities or the like.

The communication network N includes a communication network capable of transmitting and receiving information to/from each other between the management server 300 and the turn management terminal 100. The communication network N may be any of the Internet, a LAN, a private line, a telephone line, an intra-company network, a mobile communication network, Bluetooth (R), WiFi (Wireless Fidelity), other communication lines, or a combination thereof or the like, regardless of whether it is wired or wireless.

### <Turn management terminal 100>

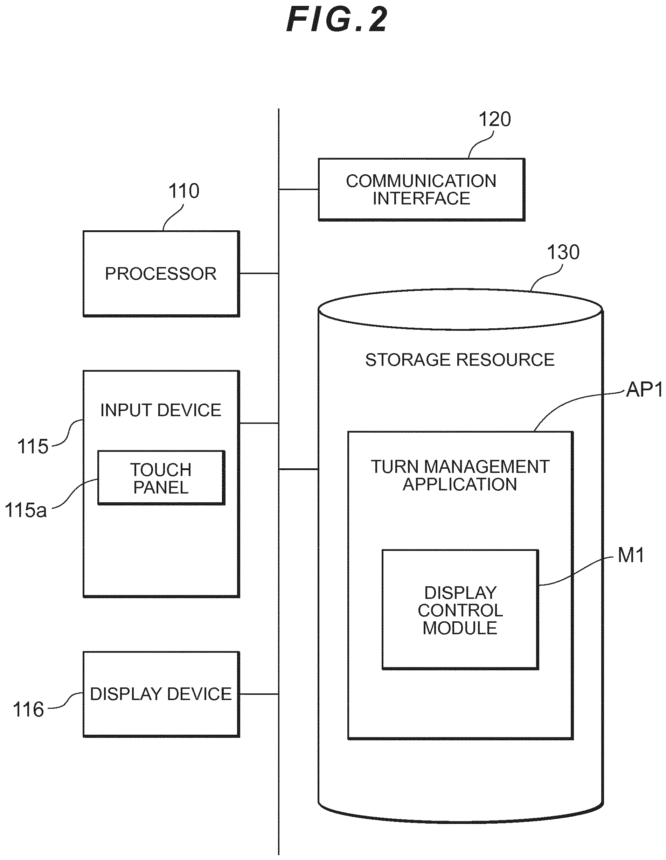

Figure 2 is a block diagram illustrating a main configuration of the turn management terminal 100. The turn management terminal 100 includes a processor 110, an input device 115, a display device 116, a communication interface 120, and a storage resource 130.

The processor 110 is configured from an arithmetic and logical operation unit (a CPU or the like) that processes an arithmetic operation, a logical operation and a bit operation or the like, and various kinds of registers, and centrally controls individual sections of the turn management terminal 100 by executing various kinds of programs stored in the storage resource 130. The various kinds of registers are, for example, a program counter, a data register, an instruction register and a general purpose register or the like.

The input device 115 includes various kinds of operation buttons and a touch panel 115a for receiving input of reception to the waiting list or deletion from the waiting list or the like.

The display device 116 is a device for displaying a reception screen or a standby screen including the waiting list and a reception button or the like, and is configured by a liquid crystal display for example.

The communication interface 120 is connected to the communication network N and is a hardware module for communicating with the other terminals on the communication network N. The communication interface 120 is, for example, a modem such as an ISDN modem, an ADSL modem, a cable modem, an optical modem or a software modem.

The storage resource 130 is, for example, a logical device provided by a storage area of a physical device. The physical device is, for example, a computer-readable recording medium such as a disk drive or a semiconductor memory (a ROM, a RAM, or the like). The storage resource 130 may be constructed by mapping a plurality of physical devices to one logical device, or may be constructed by mapping one physical device to a plurality of logical devices.

In the storage resource 130, an operating system program, a driver program and various kinds of data or the like are stored. An example of the driver program is a communication interface driver program for controlling the communication interface 120 or the like. In addition, in the storage resource 130, in addition to the various kinds of programs and the various kinds of data, a computer program (referred to as "turn management application", hereinafter) AP1 for managing the turn waiting in cooperation with the management server 300 is stored.

The turn management application AP1 includes a display control module M1 for making the display device 116 display the standby screen when the input to the input device 115 is not performed for a predetermined period of time.

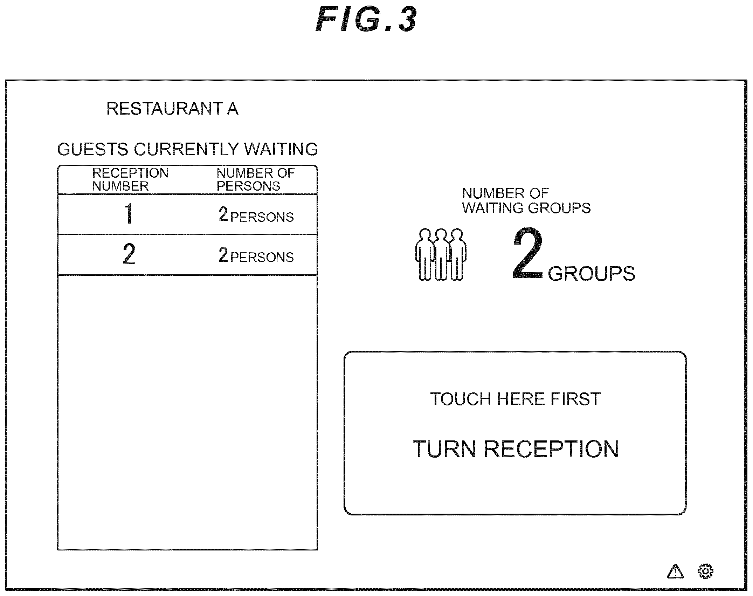

Figure 3 is a diagram illustrating the reception screen displayed at the display device 116 of the turn management terminal 100. The turn management terminal 100 receives the input of the reception to the waiting list or the deletion or the like by a user directly operating the touch panel 115a. Here, as the user, a visitor or a worker or the like of the facility is assumed. For example, the visitor performs the input for newly registering the turn waiting to the waiting list, and the worker or the like performs the input for updating the status of the information registered in the waiting list. Note that, here, the manager and the worker or the like of the facility are generally referred to as the worker or the like.

As illustrated in Figure 3, on the reception screen, at least a part of the waiting list registered in the status management table TA2, for example, a list for which rows including a reception number of the person waiting for a turn and the number of persons or the like are time-sequentially arranged in an order of reception, is displayed, and a message and the reception button or the like urging a reception operation to the waiting list are displayed at the display device 116.

### <Reception processing to waiting list>

The visitor operates the turn management terminal 100 installed in the facility, and performs the reception for newly registering the turn waiting to the waiting list. First, after touching the reception button on the reception screen, the touch panel 115a is appropriately operated according to the message displayed at the display device 116, and the number of persons for the visitor or the like is inputted. Items to be inputted upon the reception to the waiting list may include not only the number of persons with a reservation but also a preferred seat type (for example, a table or a counter) or the like. What kind of items are to be input targets may be determined according to an intention of the manager or the like of the individual facilities.

When the input is ended, the inputted information, that is, newly registered information, is uploaded from the turn management terminal 100 through the communication network N to the management server 300. When the newly registered information is received from a certain facility (here, the restaurant A), the management server 300 adds the received newly registered information to the status management table TA2, and updates the waiting list of the facility.

Note that, instead of the visitor directly operating the touch panel 115a, the worker or the like may perform the input for receiving the turn waiting. At the time, the worker or the like may operate the turn management terminal 100 installed near the entrance of the facility, or may operate the turn management terminal 100 individually used by the worker or the like as described later.

### <Update processing of turn waiting situation>

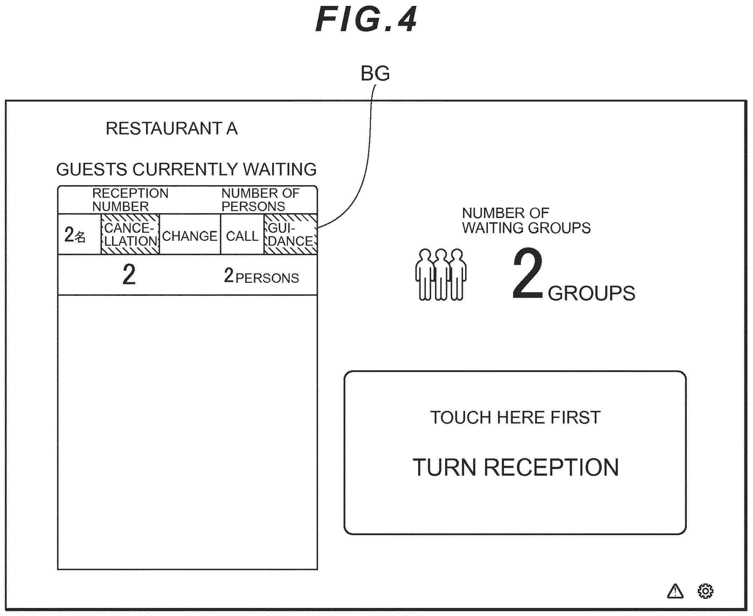

Figure 4 is a diagram illustrating the operation screen when instructing the update of the turn waiting situation (status) by the worker or the like in the turn management terminal 100. As illustrated in the figure, as an update instruction of the turn waiting situation, one of "cancellation", "change", "call" and "guidance" for example can be selected. "Cancellation" means to cancel the turn waiting, and "change" means to change once inputted details (the number of persons with a reservation or the like) of the turn waiting. In addition, "call" means a state that it is reported to the person with a reservation that the turn of the reservation has come orally or by telephone or mail or the like, and "guidance" means to delete the row of the turn waiting when the person at his/her turn is actually guided. In the present embodiment, for each reception number, that is, for an individual row of the waiting list, an update operation of the turn waiting situation can be performed.

Describing one example, the worker or the like first specifies an update target of the turn waiting situation, and then swipes the row where the target is displayed from right to left. In the example illustrated in Figure 4, the case of swiping the row of the reception number 1 when the visitor of the reception number 1 is called or the like is illustrated. As a result, an operation button group BG indicating "cancellation", "change", "call" and "guidance" as illustrated in an upper left part of Figure 4 is displayed. The worker or the like performs the update operation of the turn waiting situation by tapping a desired operation button ("call", for example). When the operation is performed, the status update information indicating the update instruction of the turn waiting situation is uploaded from the turn management terminal 100 through the communication network N to the management server 300. An update section of the management server 300 rewrites the status management table TA2 based on the received status update information, and updates the turn waiting situation (status) of the facility.

Note that, for the update operation of the turn waiting situation described above, the case of wanting to return to an original situation may also arise. Examples include the case that, even though "cancellation" is performed since there is no answer to a call, the person with a reservation returns after a few minutes. Assuming such a case, in the present embodiment, for the update operation of the turn waiting situation, a fixed number (for the past 20 operations for example) of histories are left, and the turn waiting situation can be updated again (restored) based on the histories. In addition, the update operation of the turn waiting situation is not meant to be limited to "cancellation", "change", "call" and "guidance" and can be appropriately set and changed by the manager or the like according to a business form of the facility.

In addition, the turn management terminal 100 can make the turn waiting situation be displayed on a large-sized display installed in the facility or the like. In this case, the turn management terminal 100 and an external display are connected with a cable and utilized. Since the turn waiting situation is displayed large on a screen of the external display, the visitor can recognize rough waiting time or the like by confirming the turn waiting situation displayed on the external display.

### <Display control processing>

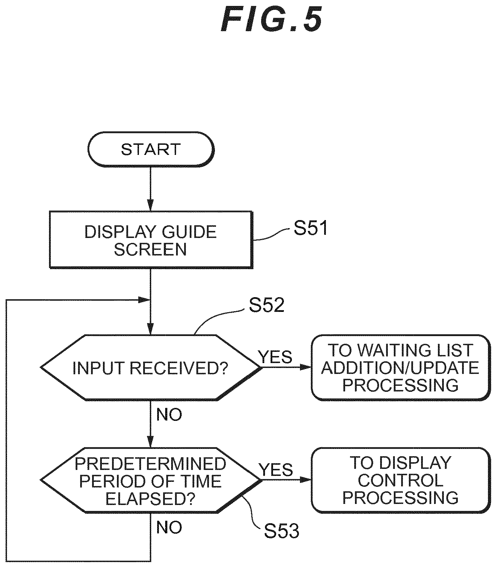

Next, processing in the present embodiment, such as a function realized by the display control module M1 will be described. Figure 5 to Figure 7 are flowcharts illustrating a flow of turn waiting management processing executed by the turn management terminal 100.

Figure 5 is a flowchart illustrating the flow of processing related to the reception screen displayed at the turn management terminal 100. The turn management terminal 100 is installed at the entrance of the facility or the like as described above, and makes the display device 116 display the reception screen for receiving the turn waiting as illustrated in Figure 3 (step S51).

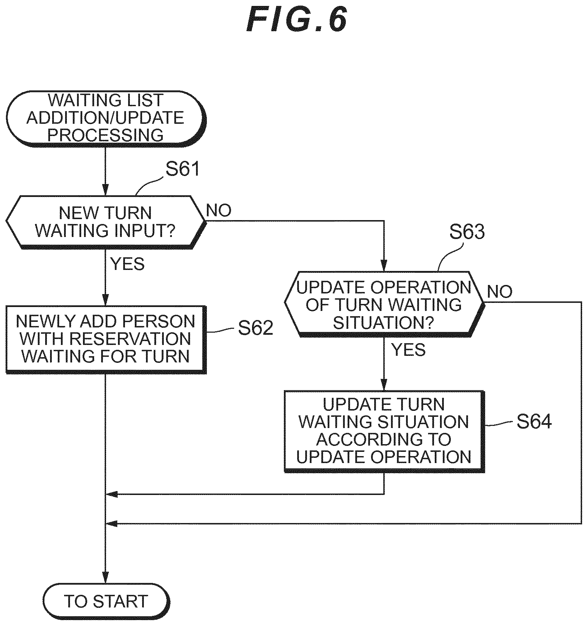

The turn management terminal 100 detects whether or not operation input to the input device 115 such as the touch panel 115a by the visitor or the worker or the like is received to the displayed reception screen (step S52). For example, when an operation to the touch panel 115a is detected and the input is received (step S52: YES), addition or update processing to the waiting list illustrated in Figure 6 is executed.

On the other hand, when the operation input to the input device 115 including the touch panel 115a is not detected (step S52: NO), whether or not the predetermined period of time has elapsed in the state of not detecting the operation input to the input device 115 is determined (step S53). The processing can be realized, for example, by starting a timer when the turn management terminal 100 receives the operation input last and having the timer detect whether or not the predetermined period of time has elapsed. For example, when one minute is set as the predetermined period of time, in step S53, whether or not the operation input has not been performed for one minute or longer to the turn management terminal 100 is detected.

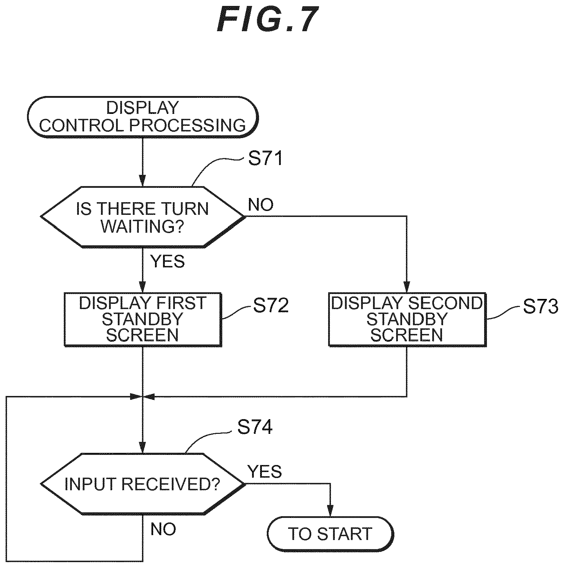

When the operation input to the input device 115 has not been detected for the predetermined period of time or longer (step S53: YES), the turn management device 100 executes display control processing illustrated in Figure 7. On the other hand, when the predetermined period of time has not elapsed after the operation input is performed last to the turn management device 100 (step S53: NO), the processing returns to step S52, and the processing of detecting the operation input to the input device 115 (step S52) and the processing of detecting whether or not the predetermined period of time has elapsed in the state that the operation input is not performed (step S53) are repeated.

Figure 6 is a flowchart illustrating an example of the addition or update processing to the waiting list, executed when the input is received to the turn management terminal 100. When the input by the visitor or the worker or the like is detected, the turn management terminal 100 detects whether or not it is the reception to the waiting list, that is, whether or not it is a new registration operation of newly adding one group of the turn waiting to the waiting list (step S61). When it is determined that it is the reception to the waiting list (step S61: YES), the turn management terminal 100 performs the processing of newly adding one group of the turn waiting to the waiting list (step S62), returns to step S51 in Figure 5 thereafter, and displays the reception screen including the waiting list after the addition processing.

On the other hand, when it is determined that it is not the reception to the waiting list (step S61: NO), a reception section and an update section of the turn management terminal 100 determine whether or not it is the update operation of the turn waiting situation which is one of "cancellation", "change", "call" and "guidance" (step S63). In the case of determining that it is not one of the update operations of the turn waiting situation (step S63: NO), the processing is ended. On the other hand, when it is determined that it is one of the update operations of the turn waiting situation (step S63: YES), the turn waiting situation is updated according to the update operation (step S64), the processing returns to step S51 in Figure 5 thereafter, and the reception screen including the updated waiting list is displayed.

For example, when the person or the group waiting for a turn is guided into the store, the worker or the like specifies the visitor for whom guidance is ended from the plurality of rows displayed on the touch panel 115a, swipes the row corresponding to the visitor, and makes the operation button group BG indicating "cancellation", "change", "call" and "guidance" be displayed. Then, the worker or the like performs the update operation of the turn waiting situation by tapping the operation button indicating "guidance". When "guidance" is selected, the corresponding person of a first order is deleted, and a succeeding person is displayed at the turn management terminal 100 as the first order in the waiting list. Note that, in the case that "cancellation", "change" or "call" is tapped, the processing according to each update operation is also executed in the turn management terminal 100 similarly.

Figure 7 is a flowchart illustrating an example of the display control processing executed by the turn management device 100 if the input to the input device 115 has not been performed for the predetermined period of time. In the present embodiment, if the input to the input device 115 has not been performed for the predetermined period of time in the state that the reception screen is displayed, the standby screen is displayed at the display device 116.

At the time, the turn management device 100 refers to the waiting list managed in the status management table TA2 in the management server 300, and determines whether or not there is a person waiting for a turn (step S71). In the case that there is a person waiting for a turn (step S71: YES), the turn management device 100 displays a first standby screen including a message indicating that the reception to the waiting list is needed at the display device 116 (step S72).

On the other hand, in the case that there is no person waiting for a turn (step S71: NO), it is possible to immediately enter the facility or receive a service so that the reception to the waiting list is not needed. Then, the turn management device 100 displays a second standby screen including a message requesting the visitor to call out to the worker or the like at the display device 116 (step S73).

Thereafter, the first or second standby screen is continuously displayed until the operation input by the visitor or the worker or the like is received by the input device 115 (step S74). Then, when it is detected that the operation input is received, the processing returns to step S51, and the reception screen is displayed.

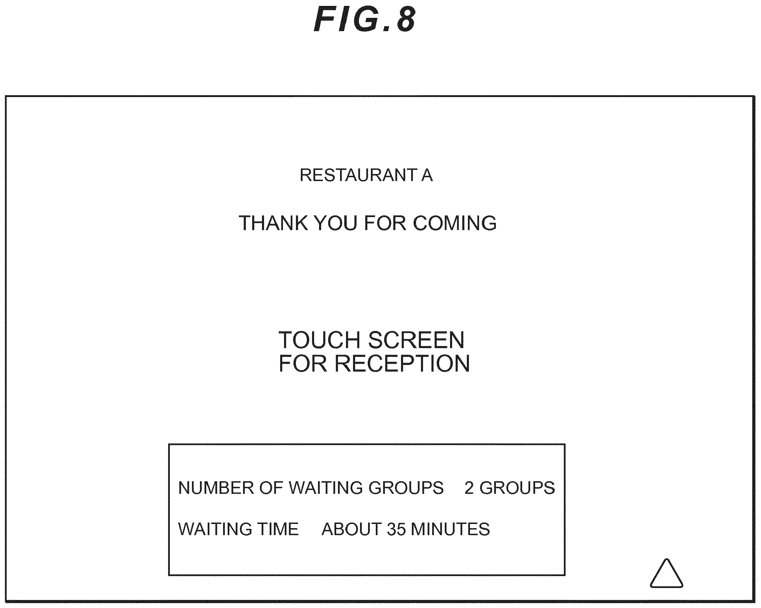

Figure 8 to Figure 10 are screen examples displayed at the display device 116 in the present embodiment.

Figure 8 is a diagram illustrating an example of the first standby screen displayed when two groups are waiting for a turn. For example, when the state that no input is performed to the input device 115 continues for the predetermined period of time after the reception screen illustrated in Figure 3 is displayed, the first standby screen illustrated in Figure 8 is displayed for example. The first standby screen includes the message indicating that the reception of the turn waiting should be performed, such as "please touch screen for reception". Thus, the visitor recognizes that there is the person waiting for a turn at present and the reception to the waiting list is needed without touching the screen and looking at the reception screen.

In addition, it is preferable that the number of waiting groups and predicted waiting time are displayed in addition to the message on the first standby screen. Thus, the visitor can recognize the turn waiting situation more accurately just by looking at the standby screen. Note that the predicted waiting time can be calculated by setting average time before one group is guided beforehand. For example, when it is set that a first group waiting for a turn is to be guided in 15 minutes and second and succeeding groups are to be guided in 10 minutes, if two groups are waiting for a turn at present for example, the visitor becomes a third group waiting for a turn when he/she performs the reception of the turn waiting so that the predicted waiting time can be calculated as 15 minutes + 10 minutes + 10 minutes = 35 minutes.

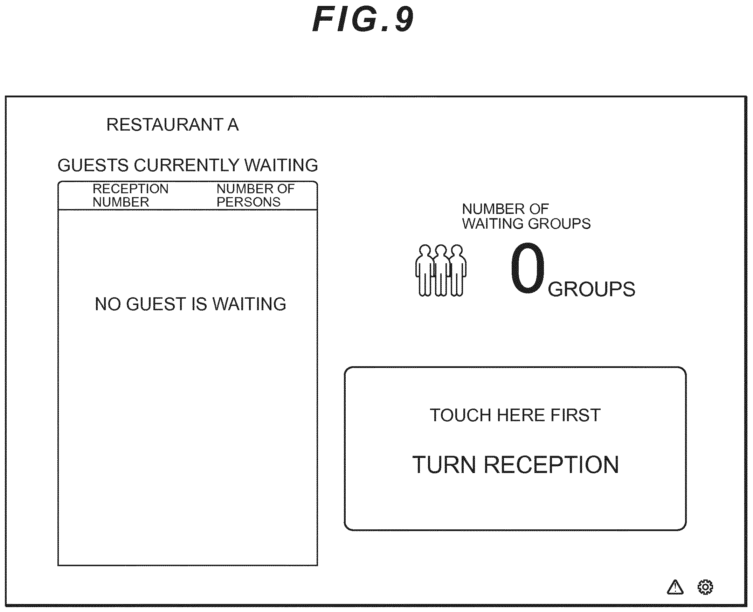

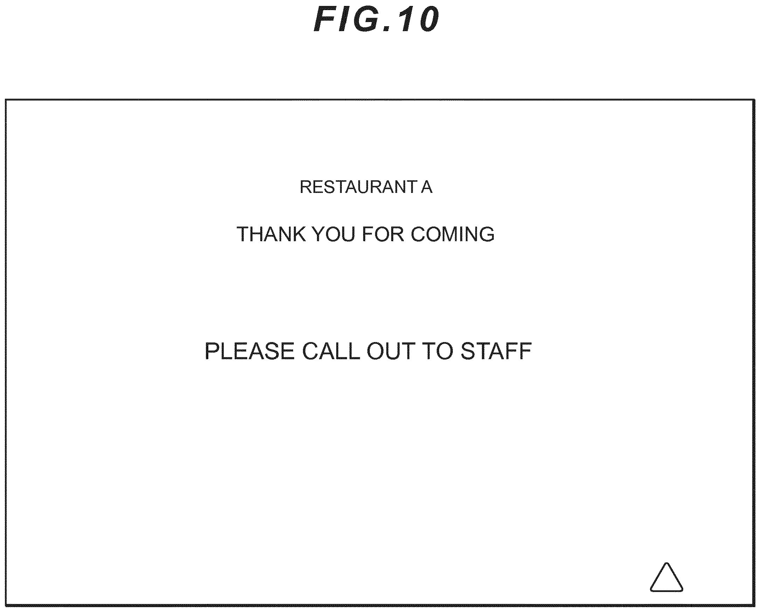

Figure 9 is an example of the reception screen displayed in the case that there is no turn waiting. In addition, Figure 10 is a diagram illustrating an example of the second standby screen displayed when there is not turn waiting. For example, when the state that no input is performed to the input device 115 continues for the predetermined period of time after the reception screen illustrated in Figure 9 is displayed, the second standby screen illustrated in Figure 10 is displayed for example. The second standby screen includes the message indicating that the worker or the like should be called out without the reception of the turn waiting, such as "please call out to staff". Thus, the visitor recognizes that no one is waiting for a turn at present and he/she is to be immediately guided when the staff is called, without touching the screen and looking at the reception screen.

As described above, according to the present embodiment, the standby screen when the input is not performed for the predetermined period of time can be discriminately presented according to the number of groups waiting for a turn. The message to perform the reception of the turn waiting is displayed in the case that the turn waiting is needed, and the message to call out to the staff is displayed in the case that the turn waiting is not needed. Thus, since the visitor can immediately and accurately recognize whether or not the turn waiting is needed, it is possible to prevent waste such as a ticket issuing operation by the visitor to issue an unneeded ticket when there is no turn waiting and the issuance of the numbered ticket is not needed, and an interruption of the operation of the worker or the like by the visitor calling out to the staff when there is the turn waiting and the visitor should perform the reception of the turn waiting and issue the numbered ticket.

Note that, here, an embodiment of displaying the standby screen after the lapse of the predetermined period of time is illustrated, but timing of displaying the standby screen or the like is not limited thereto, and the timing of displaying the standby screen and the contents to be displayed as the standby screen may be individually set and discriminately presented according to the turn waiting situation such as the number of groups waiting for a turn and the time.

For example, in the case that there is no turn waiting, the second standby screen may be displayed without waiting for the predetermined period of time to elapse. That is, the display control module M1 of the turn management terminal 100 may make the display device 116 display the second standby screen in the case that there is no turn waiting, may make the reception screen be displayed first similarly to the above-described embodiment in the case that there is the turn waiting, and may make the first standby screen be displayed when there is no input for the predetermined period of time thereafter.

In addition, the display control module M1 may determine whether or not the present time is within the business hours of the facility, and when it is out of the business hours, may make the display device 116 display the standby screen including a message of the contents indicating that it is out of the business hours, such as "It is out of business hours. Please wait until opening time". At the time, when it is within the business hours, as described above, the standby screen can be discriminately presented according to the number of waiting groups.

In addition, the display control module M1 of the turn management terminal 100 may calculate the predicted waiting time based on the number of groups waiting for a turn, determine whether or not the time for which the predicted waiting time is added to the present time is within the business hours of the facility, and when it is out of the business hours, make the standby screen including a message of the contents indicating that the reception of the turn waiting is ended, such as "The reception is ended today." be displayed.

### B. Second embodiment

While the case of utilizing one turn management terminal 100 in one facility is described in the first embodiment described above, in the second embodiment, the case of utilizing the plurality of turn management terminals 100 in one facility will be described.

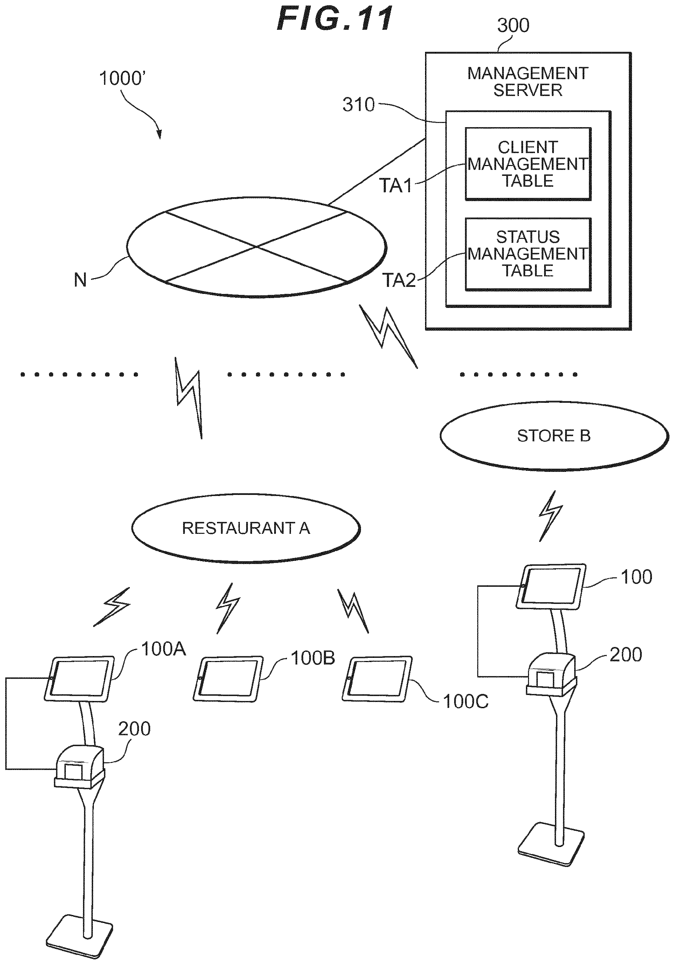

Figure 11 is a diagram illustrating a schematic configuration of a turn management system 1000' relating to the second embodiment. The turn management system 1000' illustrated in Figure 11 is similar to Figure 1 except for a point that the plurality of turn management terminals 100 are provided in one facility. Therefore, the same signs are attached to corresponding parts, and detailed description is omitted.

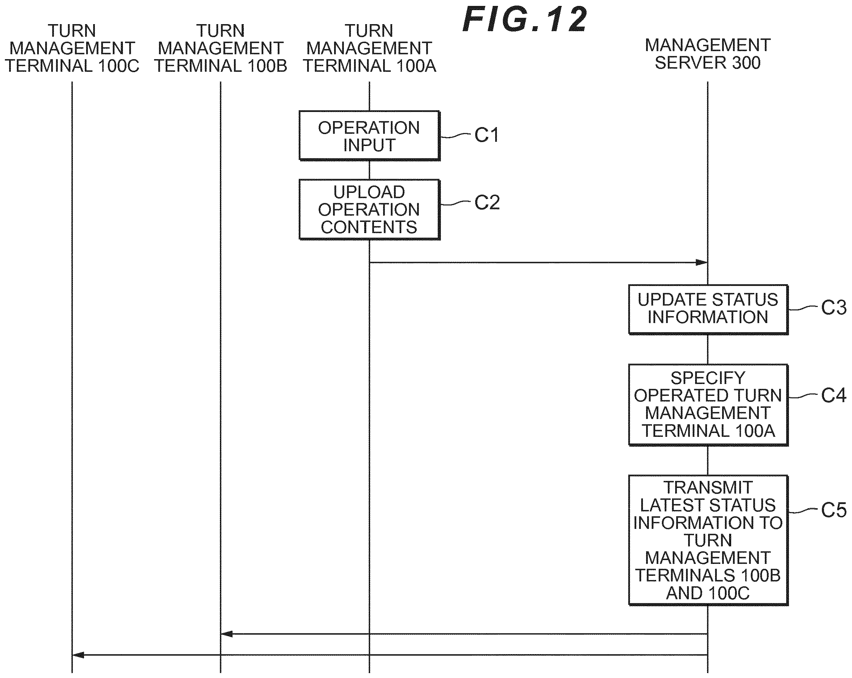

The case of utilizing the plurality of turn management terminals 100 in one facility is different from the case of utilizing only one turn management terminal 100 in a point that data is shared among the respective turn management terminals 100. Figure 12 is a sequence diagram in the case of managing the turn utilizing three turn management terminals 100A-100C. For example, when a specific turn management terminal 100 (the turn management terminal 100A illustrated in Figure 11) is operated in the restaurant A (C1), the operation contents (assuming the status update information, here) are uploaded to the management server 300 (C2). The management server 300 updates the status information of the restaurant A registered to the status management table TA2 based on the received status update information (C3). Then, the management server 300 refers to the client management table TA1, and specifies the turn management terminal 100 utilized in the restaurant A (C4). Here, since the three turn management terminals 100A-100C are registered in the client management table TA1 for the restaurant A, the management server (transmission section) 300 transmits updated latest status information to the terminals other than the turn management terminal 100A, that is, the turn management terminals 100B and 100C (C5), and ends the processing.

As a result, the latest information is reflected to the respective turn management terminals 100 in the state of being synchronized at all times, and thus, even in the case of utilizing the plurality of turn management terminals 100 in one facility, the turn waiting can be optically managed without generating a failure that the update information of the turn waiting is not reflected in some turn management terminal 100 or the like.

### C. Others

Note that the present invention is not limited to the embodiments described above, and can be implemented in other various forms without departing from the scope of the present invention. Therefore, the above-described embodiments are just examples in all respects, and should not be narrowly interpreted. For example, the order of respective processing steps described above can be arbitrarily changed without causing discrepancy in processing contents, or the processing steps can be executed in parallel.

While the system of managing the turn by cooperation of the turn management terminal 100 and the management server 300 is described in the embodiments described above, the configuration of the system is not limited thereto and various configurations can be adopted. For example, by providing the function that the management server 300 has on the side of the turn management terminal 100, a device having the function equal to that of the turn management system 1000 can be configured by the turn management terminal 100 alone.

In addition, while the standby screen is discriminately presented depending on whether or not there is the turn waiting in the embodiments described above, without being limited thereto, the plurality of standby screens can be discriminately presented according to the number of groups waiting for a turn. For example, it is possible to control the display more finely like displaying the standby screen including the message to call out to the staff when there is no turn waiting, displaying the standby screen including the message urging to wait inside the store after the reception when a predetermined number (5 groups for example) or a smaller number of groups are waiting for a turn, and displaying the standby screen including the message indicating that it is alright to go outside the store after the reception when the predetermined number or more of groups are waiting for a turn.

Further, in the second embodiment, the turn management terminal 100A connected with the printer 200 can be installed near the entrance of the facility to be used as a terminal for reception by the visitor, and the turn management terminals 100B and 100C can be individually held by the worker or the like and used as terminals for status update including the deletion by the worker or the like. At the time, the turn management terminal 100A for the reception can receive only new registration of the turn waiting, and the turn management terminals 100B and 100C for the status update can receive both of the new registration of the turn waiting and the status update. Thus, the visitor can only register the turn waiting, and it is possible to prevent the visitor from erroneously performing the deletion or performing the status update. Further, whether to make it possible to receive only the new registration of the turn waiting or to receive both of the new registration of the turn waiting and the status update in the turn management terminal 100 may be realized by switching a mode within a single application.

Even though the numbered ticket issued from the printer 200 is not mentioned in particular, efficiency of turn waiting management may be improved by utilizing QR codes (R). A person making a reservation performs the input of the turn waiting, and receives the numbered ticket issued from the printer 200. Thereafter, the person making a reservation reads the QR code printed on the numbered ticket by utilizing his/her own smartphone or the like. By reading the QR code, a current turn waiting situation (the current number of waiting persons or the like) is displayed on a liquid crystal panel of the smartphone or the like. Then, when his/her turn approaches, remind mail for calling arrives. Thus, the person can enter the store without lining up at a storefront for a long time, stress of an action of "waiting for a long time" can be reduced, and the time conventionally wasted by the action of "waiting" can be effectively utilized.

Note that, an example of a method of setting the remind mail is a method of displaying a message urging input of a mail address within a page when the QR code is read or the like (such as "Input mail address to receive notice below"). The person making a reservation can receive the remind mail by inputting the mail address according to the message.

In addition, a phone call may be made instead of (or in addition to) the remind mail. After the input of the turn waiting is ended, a message to confirm the person making a reservation whether to desire phone call setting is displayed at the turn management terminal 100 (such as "Phone call can be set. If you like, press button below and input phone number"). In the case of desiring the phone call setting, the person making a reservation inputs a phone number according to the message. As a result, when his/her turn approaches, calling by automated voice or the like is performed, and it is possible to enter the store without lining up at the storefront for a long time.

## Claims

1. A turn management system that manages turn waiting of a reservation in a facility under management, the turn management system comprising:
an input device that receives input for addition or update to a waiting list;
a display device for displaying a screen including at least a part of the waiting list; and
display control means for making the display device display a standby screen when the input to the input device is not performed for a predetermined period of time,
wherein the display control means makes a first standby screen be displayed, when there is turn waiting in the waiting list, and a second standby screen be displayed, when there is no turn waiting in the waiting list, and
wherein the display control means calculates predicted waiting time based on the number of waiting groups in the waiting list, determines whether or not the time obtained by adding the predicted waiting time to the present time is within business hours of the facility, and makes the standby screen including a message indicating that reception of turn waiting is ended be displayed when the time is out of the business hours.

2. The turn management system according to claim 1, wherein the display control means further discriminately presents a plurality of standby screens to be displayed according to the number of groups waiting for a turn when there is turn waiting in the waiting list.

3. The turn management system according to claim 1,
wherein
when there is turn waiting in the waiting list,
the display control means makes a standby screen including a first message be displayed as the first standby screen when the number of groups waiting for a turn is smaller than a predetermined number, and makes a standby screen including a second message different from the first message be displayed as the first standby screen when the number of groups waiting for a turn is equal to or larger than the predetermined number, and
when there is no turn waiting in the waiting list,
the display control means makes a standby screen including a message of content indicating that turn waiting is unnecessary be displayed as the second standby screen.

4. A method of controlling display at a display device, in a turn management system that manages turn waiting in a facility under management,
wherein the method executed by display control means comprises:
determining whether or not input to an input device that receives input for addition or update to a waiting list is not performed for a predetermined period of time;
making a first standby screen be displayed when it is determined that the input to the input device is not performed for the predetermined period of time and when there is turn waiting in the waiting list; and
making a second standby screen be displayed when it is determined that the input to the input device is not performed for the predetermined period of time and when there is no turn waiting in the waiting list,
wherein the first standby screen is displayed by:
calculating predicted waiting time based on the number of waiting groups in the waiting list,
determining whether or not the time obtained by adding the predicted waiting time to the present time is within business hours of the facility, and
making a standby screen including a message indicating that reception of turn waiting is ended be displayed as the first standby screen when the time is out of the business hours.

5. A computer-readable recording medium having a program recorded thereon for making a computer that manages turn waiting of a reservation in a facility under management execute:
determining whether or not input to an input device that receives input for addition or update to a waiting list is not performed for a predetermined period of time;
making a first standby screen be displayed, when it is determined that the input to the input device is not performed for the predetermined period of time and when there is turn waiting in the waiting list, by calculating predicted waiting time based on the number of waiting groups in the waiting list, determining whether or not the time obtained by adding the predicted waiting time to the present time is within business hours of the facility, and making a standby screen including a message indicating that reception of turn waiting is ended be displayed as the first standby screen when the time is out of the business hours, and
making a second standby screen be displayed when it is determined that the input to the input device is not performed for the predetermined period of time and when there is no turn waiting in the waiting list.
